(19) Europäisches Patentamt
European Patent Office
Office européen des brevets

(11) EP 2 626 447 A1

(12) # EUROPEAN PATENT APPLICATION

(43) Date of publication:
**14.08.2013 Bulletin 2013/33**

(51) Int Cl.:
***C23C 18/12*** *(2006.01)*

(21) Application number: **12000781.0**

(22) Date of filing: **07.02.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ILFORD Imaging Switzerland GmbH**
**1723 Marly 1 (CH)**

(72) Inventors:
- **Fürholz, Urs**
  **1723 Marly (CH)**
- **Ruffleux, Vincent**
  **1724 Le Mouret (CH)**
- **Schüttel, Stefan**
  **3280 Murten (CH)**

(74) Representative: **Herzog, Martin**
**Herzog Fiesser & Partner**
**Patentanwälte**
**Immermannstrasse 40**
**40210 Düsseldorf (DE)**

(54) **Nanoporous layers for optical applications**

(57) The invention relates to a layer structure comprising a substrate layer and a layer, which comprises a plurality of silicon oxide particles, wherein said silicon oxide particles have a positively charged surface (a PCS layer), which PCS layer is at least partially superimposed to the substrate layer and wherein the refractive index of the PCS layer is less than 1.2, a process for preparing the layer structure having a substrate and a PCS layer, a layer structure obtainable by the process, an optical device comprising the layer structure and the use of a PCS layer.

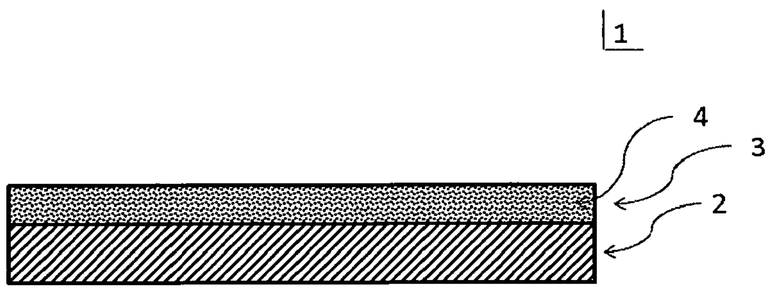


*FIGURE 1*

EP 2 626 447 A1

## Description

The invention relates to a layer structure comprising a substrate layer and a layer, which comprises a plurality of silicon oxide particles, wherein said silicon oxide particles have a positively charged surface (in the following referred to as: a PCS layer), which PCS layer is at least partially superimposed to the substrate layer, wherein the refractive index of the PCS layer is less than 1.2, a process for preparing the layer structure having a substrate and a PCS layer, a layer structure obtainable by the process, an optical device comprising the layer structure and the use of a PCS layer.

In a variety of applications, there is an ongoing need for thin, smooth, transparent and/or thermally insulating films. A prominent example are opto-electronic applications, in which films are required having a combination of two or more of the aforementioned properties. Further, there is a continuous trend to miniaturization on the one hand, and improvement of efficiency on the other hand. Accordingly, continuous efforts are made to develop thinner, smoother, more transparent and/or better thermally insulating layers.

In particular in opto-electronic application, there is an ongoing search for materials having a low refractive index ($n_D$). Multilayer films and coatings are produced using these materials to obtain layers providing high transmission, low reflection and low absorption of the light passing through. Turning to the materials available for making such layers, dense matter is of limited use, since most transparent materials, such as glass and PMMA, have a refractive index of larger than 1.45. There are only few solid materials, which have a refractive index in the range of from 1.0 (air) to 1.45, e.g. magnesium fluoride with $n_D$ = 1.38, sodium fluoride ($n_D$ = 1.32) and some organofluor compounds, the refractive index of which is in the range of 1.34 - 1.38.

It is an approach to produce porous materials in order to arrive at refractive indices of less than $n_D$ = 1.4 using compounds such as aluminium oxide ($n_D$ = 1.76), boehmite ($n_D$ = 1.65) or amorphous silicon oxide ($n_D$ = 1.46). An example of these new materials is a so-called aerogel, which is microporous silica comprising more than 90 % of pores (air) in the silica structure. By adjusting the pore volume and size, i.e. the fraction of air in the silica structure, materials of any refractive index between 1.02 and 1.46 are obtainable. However, aerogels are susceptible to water and deteriorate under humid conditions. This renders the manufacturing process even more complex, because aerogels are usually manufactured in a sol-gel-process. Thus, defects in the aerogel structure are prevalent. Another disadvantage of the aerogel process is the use of tetramethyl orthosilicate, which is toxic and, besides, difficult to handle. Alternative manufacturing processes were elaborated, but these processes imply other disadvantages, such as limitations in the refractive index obtainable (BASF-process) or small conversion rates. From an industrial perspective, a further disadvantage is that aerogels cannot be deposited directly on many substrates, since the substrate will not accept the drying conditions necessary for obtaining aerogels from sol-gel-processes. This is a particular draw-back in the use of aerogels on printed circuit boards, or in the production of multilayer structures for e.g. light emitting or light guiding devices. All these implications limit the use of aerogels and are significant cost-factors in industrial production. Finally, production on a large scale is very limited.

Another approach to layers of low refractive index are sol-gel coating processes, in which a sol, e.g. a silica-sol (anionic) or an aluminium-sol (positively charged), is applied onto a substrate. A precursor of a porous layer is then formed during evaporation of the liquid phase by aggregation of the remaining particles. Finally, pyrolysis removes organic residues of the aggregated layer and favours further polycondensation reactions, and thus supports the mechanical stability of the obtained porous layer. During the evaporation of solvent, the layers are subject to some shrinking, which induces crack formation. During pyrolysis, further formation of cracks is promoted because of thermal stress acting on the layer. These cracks, however, cause scattering phenomena in the layer, when light is passed through the layer.

Further, inorganic layers are often brittle and do not adhere well to a substrate, e.g. a plastic sheet. However, today's optical and electrical devices are often required to be bendable, at least to a certain extent. Enduring adhesion is another must-have. A common way to handle these issues is the use of an adhesion promoter. However, an adhesion promoter is an organic, dense material, which has a higher refractive index than the porous layer. Further, the adhesion promoter will not only provide adhesion at the interface layer-substrate, but also fill the pores of the porous layer. That way, the refractive index of the layer structure will increase.

Accordingly, there is an ongoing need for developing further layer having low refractive index, high transmission, low reflectance and low energy absorbance. Further, there is a need to improve the processes which are used to manufacture these materials and these layers. In particular, a demand is observed for manufacturing processes performable on large industrial scale at lower cost than today's technology. Further, more efficient light guides, light sources and electrical insulators as well as cost reduction in the production is sought.

Accordingly, an object of the invention is to provide optical devices with low light loss. It is another object of the invention to provide optical devices, which are more efficient or more sensitive, or both.

It is another object of the invention to provide thermal insulators that can be applied to a substrate by large-scale coating technology.

It is another object of the invention to provide means for a simplified construction of optical devices, e.g. by enabling a simplified construction of components of optical devices. In line with this, reducing the cost of manufacturing

optical devices and optical device elements is another object of the invention.

It is another object to provide means for constructing thinner devices or device elements.

It is another object of the invention to provide means for constructing devices of improved durability, accuracy and precision.

It is another object of the invention to provide optical device and/or topcoats, which have an improved scratch resistance.

It is another object of the invention to provide an interface between air and a dense matter, wherein the interface shows little to no reflection.

It is another object of the invention to provide layers having a good heat stability in the temperature range of up to 100 °C.

Another object of the invention is to provide a technology for making porous silica layers and articles having a low refractive index, in which technology the use of hazardous materials is reduced, or even avoided. A further effort shall be made to avoid volatile organic compounds (VOC) in such a technology.

Another object of the invention is to provide layers of porous silica, which are not brittle, but bendable and adhere well to the substrate applied onto.

Surprisingly, layers comprising silicon oxide particles having a positively charged surface have been found to solve at least one of the objects mentioned above. Further, the manufacturing processes for these silicon oxide particles having a positively charged surface have been found to be environmentally acceptable and upscaling according to the need of the industry is easily achieved. Further, a use of such layers supports the development of thinner devices and device elements, since the number of parts in the device may be reduced. Where two parts were needed to separate two optical layers from each other, one part is now sufficient, in which these two optical layers are separated by the inventive PCS layer. This is considered to be one aspect to also make less expensive, more durable parts with a higher degree of accuracy and precision

A contribution to the solution of at least one of the above objects is provided by the subject matters of the category-forming claims, whereby the dependent sub-claims of the category-forming independent claims represent preferred aspects of the invention, whose subject matters likewise make a contribution to solving at least one of the objects mentioned above.

A first aspect of the invention is a layer structure comprising

(a) a substrate layer, preferable a transparent substrate layer; and
(b) a PCS layer at least partially superimposed to the substrate layer,
wherein the PCS layer comprises a plurality of silicon oxide particles,
wherein said silicon oxide particles have a positively charged surface,
wherein the refractive index of the PCS layer is less than 1.2, preferably less than 1.17, less than 1.15, or from 1.19 to 1.01.

A method to determine the refractive index is described below.

The term transparent in the context of this invention is used to characterise an article, through which light of a wavelength $\lambda$ of from 350 nm to 800 nm can pass, whereby the amount of light passed through the item or system is at least 85 % of the amount of light, which amount entered the article.

A surface of an article, e.g. a silicon oxide particle, is considered positively charged at the surface, when the zeta potential of the item is larger than 0 mV. The Zeta Potential can be determined according to the method described below.

A layer structure according to the invention implies a plurality comprising two or more layers, in which at least a part of a layer is interconnected with at least a part of at least one adjacent layer.

According to an aspect of the invention, the substrate layer comprises at least one of the following items: paper, resin coated paper, japanese tissue paper, card board, metal, such as aluminium, metal foil, metallised substrates, e.g. a polymer, onto which a layer of metal is deposited, glass and flexible glass (e.g.:_ "Gorilla Glass" manufactured by Coming, Inc., USA). According to another aspect of the invention, the substrate layer comprises at least one polymer. Numerous of the known polymers enter into the consideration of those skilled in the art. Preferably, the polymer is comprised in the substrate layer. Preferably, the polymer is selected from the group consisting of cellulose esters such as cellulose triacetate, cellulose acetate, cellulose propionate or cellulose acetate/butyrate, polyesters such as polyethylene terephthalate or polyethylene naphthalate, polyamides, polycarbonates, polyimides, polyolefins, polyvinyl acetals, polyethers, polyvinyl chloride, polyvinylidenfluoride, polyvinyl sulphones, acrylnitrile, butadiene, styrene, polycarbonates, polyetherimide, polyester ketones, poly(methylmethacrylate), polyoxymethylene and polystyrene, or a combination of two or more thereof.

Further, the polymer is preferably selected from the group consisting of aliphatic polyesters such as polycaprolactone, poly($\beta$-propiolactone), poly(hydroxyalkanoate), poly(hydroxybutyrate), poly(glycolic acid), poly($\beta$-malic acid),

poly(alkylene succinate)s, poly(butylene succinate), poly(lactide)s, starch blends, poly(p-dioxanone), acetyl cellulose with low degree of acylation, poly(vinyl alcohol)s, polyamides, poly(amino acids), pseudo-poly(α-amino acids), poly(α-amino acid ester), copolyesters, copolyamides, poly(ester amides), poly(ester ureas), poly(iminocarbonates), polyanhydrides, poly(ethylene glycol)s, poly(orthoester)s, polyphosphazenes, polyurethanes, poly(ester urethane), poly(ether urethane), poly(urethane urea)s, polystyrene, polyolefines such as polypropylene, aliphatic-aromatic copolyesters such as copolyesters of polycaprolactone and poly(ethylene terephthalate), copolyesters of polycaprolactone and poly(butylene terephthalate), copolyesters of polycaprolactone and poly(ethylene isophthalate), copolyesters of adipic acid and terephthalic acid, copolyesters of 1,4-butanediol, adipic acid and terephthalic acid, or a combination of at least two thereof.

According to another aspect of the invention, the substrate layer is a composite material comprising two or more of the aforementioned substrate layer materials.

Preferably, the substrate layer is transparent. A transparent substrate layer can be principally obtained by the polymers mentioned above. However, the manufacturing process must be controlled to obtain materials having appropriate structures, such as crystallites, wherein the size of the structures is smaller than a quarter of the wavelength of light passing through, e.g. if the substrate layer is exposed to light of a wavelength $\lambda$ in the range of from 350 nm to 800 nm, than the structures present in the transparent layer should be smaller than 350/4 nm = 87.5 nm. More preferably, the structures in the transparent layer are smaller than 60 nm, or smaller than 50 nm, or smaller than 40 nm. Usually, amorphous materials meet aforementioned requirements. In this regard, the size of a structure is considered as the longest direct line through the structure which connects two points on the surface of the structure.

According to another aspect of the invention, the substrate layer may be opaque. Numerous of the known opaque materials enter into the consideration of those skilled in the art. Preferred materials for opaque substrates are those materials known in the photographic industry, e.g. baryta paper, polyolefin-coated paper or voided polyester (such as Melinex® manufactured by Du-Pont Tejin films).

In addition, the layer structure according to the invention comprises at least one PCS layer, which is superimposed to the substrate layer. The term superimposed in the context of this invention is used to describe the relative position of a first item, e.g. the PCS layer, with respect to a second item, e.g. a second layer such as the substrate layer. Possibly, further items, e.g. beads or layers may be arranged between the first and the second item. Preferably, the PCS layer is at least partially, e.g. for at least 30 %, 50 %, 70 % or for at least 90 % of the area of the layer structure, superimposed to the substrate layer.

According to another preferred aspect of the invention, the PCS layer and the substrate layer are connected. The term connected in the context of this invention is used to describe the fact that two superimposed items, e.g. two superimposed layers, are linked. Preferably, the link of the two superimposed items is at least partially, e.g. for at least 30 %, 50 %, 70 % or for at least 90 % with respect to the area of superimposition of the two items.

In general, numerous means and techniques enter into the consideration of those skilled in the art to connect two layers, which are known and appear proper. Preferably, two layers may be connected by electrostatic interactions, chemical bonding, Van-der-Waals forces, or a combination of at least two thereof. According to another preferred aspect, connecting two layers can be furthered by applying a binder onto at least one of the surfaces of the two layers prior to arranging one layer onto the other layer. According to another preferred method, a liquid phase can be applied to a first layer, the liquid phase forming a further, preferably solid, layer on the first layer by separation of at least a part of the liquid from the liquid phase, e.g. by evaporation of solvent and/or water from a dispersion or a solution. The layer structure according to the invention preferably comprises a plurality of two or more layers, in which at least a part of a layer is connected with at least a part of at least one adjacent layer.

The at least one PCS layer comprises a plurality of silicon oxide particles. Two major processes are widely used to produce silicon oxide particles of small particle size. In the first process, a precipitation in a wet process (precipitated silicon dioxide) is performed. In the second process, a gas phase reaction yields the desired silicon oxide particles (fumed silicon dioxide). The fumed silicon dioxide is generally prepared by flame pyrolysis, for example by burning silicon tetrachloride in the presence of hydrogen and oxygen. A variety of commercial products of fumed silicon dioxides is offered under the tradename Aerosil® from Evonik Industries AG, Essen, Germany. Another commercial product is Cab-O-Sil® H-5, available from Cabot Corporation, Billerica, USA.

According to a further aspect of the invention, the silicon oxide particles, which are present in the PCS layer, have an average particle diameter, preferably determined in a liquid phase, in the range of from 1 to 200 nm, preferably in the range of from 10 to 200 nm, preferably in the range of from 30 to 150 nm, more preferably in the range of from 30 to 120 nm, yet more preferably in the range of from 30 to 90 nm, even more preferably in the range of from 30 to 80 nm, or in the range of from 35 to 75 nm, most preferably in the range from 40 to 70 nm. Silicon oxide particles like those mentioned above are aggregates. These silicon oxide particles of aforementioned size ranges are often referred to as "nanoparticles". The average particle diameter of such aggregates $d_{50}$ is defined as the diameter, where 50 mass-% (of the aggregates) of the sample have a larger diameter, and the other 50 mass-% have a smaller diameter. The diameter of the aggregates can be measured using various techniques, e.g. using a centrifugal sedimentation particle size analyzer.

According to another aspect of the invention, the layer structure forms a part of an optical device selected from

the group consisting of light emitting devices, light guiding devices, light converting devices light recording devices and electrically insulating layers, or a combination of two or more thereof.

Numerous of the known optical devices selected from the above mentioned groups enter into the consideration of those skilled in the art. Preferred light emitting devices are selected from the group consisting of panel lighting, flat panel lighting, flood lights, head lights, spotlights and electronic displays. Preferred light guiding devices are selected from the group consisting of planar and non-planar light guides.. Preferred light converting devices are selected from the group consisting of color converters and color filters. Further preferred optical devices are anti-reflection devices and light-diffusing devices. Further, systems combining two or more of the aforementioned optical devices may be selected. Of these, systems such as displays, cameras and projectors are preferred.

According to another aspect of the invention, the PCS layer has a pore volume in the range of from 55 to 80 %-Vol., preferably in the range of from 60 to 75 %-Vol, each based on the total volume of the PCS layer. The pore volume can be determined by the method described below.

According to a further aspect of the invention, the silicon oxide, which is present in the PCS layer, has a BET specific surface area in the range of from 20 $m^2/g$ to 600 $m^2/g$, preferably in the range of from 50 $m^2/g$ to 550 $m^2/g$, more preferably in the range of from 70 $m^2/g$ to 500 $m^2/g$, yet more preferably in the range of from 100 $m^2/g$ to 400 $m^2/g$.

According to a further aspect of the invention, the silicon oxide particles, which are present in the PCS layer, have a positively charged surface. A surface of an item, e.g. a silicon oxide particle, is considered positively charged at the surface, when the zeta potential of the item is larger than 0 mV. Preferably the surface of suitable silicon oxide has a zeta potential of more than +20 mV, more than +30 mV or more than +40 mV. Accordingly, preferred ranges of the Zeta Potential are range from 0 to +100 mV, from 0 to + 70 mV, from 0 to +50 mV, from 20 mV to 50 mV, from 25 mV to 50 mV, from 30 mV to 50 mV, from 35 mV to 50 mV or from 35 mV to 50 mV.

According to a further aspect of the invention, the silicon oxide particles, which are present in the PCS layer, may further comprise at least a compound selected from the group consisting of trivalent aluminium compounds, tetravalent zirconium compounds, aminoorganosilane compounds, reaction products of at least one trivalent aluminium compound with at least one aminoorganosilane compound, reaction products of at least one tetravalent zirconium compound with at least one aminoorganosilane compound, reaction products of at least one trivalent aluminium compound and at least one tetravalent zirconium compound with at least one aminoorganosilane compound and combinations thereof.

Preferably, the modification of the silicon oxide particles is performed at least on the surface of the particles. Accordingly, the silicon oxide particles, which are present in the PCS layer, comprise at least one of the aforementioned compounds at least on the surface of the particles. Another preferred aspect of the invention relates to such a modification, which can be performed on the surface and in cavities of the particles, particle agglomerates or both. Accordingly, the silicon oxide particles, which are present in the PCS layer, comprise at least one of the aforementioned compounds at least on the surface and in at least some cavities of the particles.

A silicon oxide particle, the surface of which has been modified by a treatment with aluminium chlorohydrate, is a preferred silicon oxide particle having a positively charged according to the invention.

A silicon oxide particle, the surface of which has been modified by a treatment with zirconium compounds, is a preferred silicon oxide particle having a positively charged according to the invention.

A silicon oxide particle, the surface of which has been modified by a treatment with an aminoorganosilane, is another preferred silicon oxide particle having a positively charged surface according to the invention.

A silicon oxide particle, the surface of which has been modified by a treatment with the reaction products of a compound of trivalent aluminium (such as aluminium chlorohydrate) or tetravalent zirconium (such as zirconium oxychloride, zirconium carbonate, zirconium acetate or zirconium lactate) or both, preferably reacted with at least one aminoorganosilane, is another preferred silicon oxide particle having a positively charged surface according to the invention.

A silicon oxide particle, the surface of which has been modified by a treatment with an aluminium-zirconium hydrate complex (such as aluminium zirconium trichlorohydrate, aluminium zirconium tetrachlorohydrate, aluminium zirconium pentachlorohydrate or aluminium zirconium octachlorohydrate), is another preferred silicon oxide particle having a positively charged surface according to the invention.

A silicon oxide particle, the surface of which has been modified by a treatment with an aluminium-zirconium hydrate complex and an aminoorganosilane, is another preferred silicon oxide particle having a positively charged surface according to the invention.

Of the available types of silicon oxide particles, fumed silicon oxide particles, which are also known as fumed silicon dioxide, are preferred. Accordingly, aforementioned silicon oxide particle having a positively charged surface are preferably based on fumed silicon oxide particles. In the preparation of such surface modified silicon oxide particles, fumed silicon dioxide, for example, is added at high shear rates to a mainly aqueous solution containing the reaction products of a compound of trivalent aluminium (e.g., aluminium chlorohydrate), preferably reacted with at least one aminoorganosilane. Under suitable conditions, a dispersion of surface modified fumed silicon oxide particles is obtained that does not coagulate. The mixture containing the reaction products of a compound of trivalent aluminium (such as

aluminium chlorohydrate) with at least one aminoorganosilane has a high buffer capacity. The alkaline aminoorganosilane neutralizes hydrochloric acid formed during hydrolysis of the compound of trivalent aluminium (e.g., aluminium chlorohydrate). The required quantity of the compound of trivalent aluminium (e.g., aluminium chlorohydrate) for the surface modification of silicon dioxide is much lower in comparison to a modification with aluminium chlorohydrate only. These surface modified dispersions of silicon oxide particles have a much lower salt content in comparison to dispersions where the surface has been modified with aluminium chlorohydrate. The reaction products used in the surface modification step of a compound of trivalent aluminium (e.g., aluminium chlorohydrate) with at least one aminoorganosilane may be prepared by the addition of the aminoorganosilane to an aqueous solution of the compound of trivalent aluminium (e.g., aluminium chlorohydrate) or vice versa. The reaction of the compound of trivalent aluminium with the aminoorganosilane is usually carried out at temperatures from 10° C. to 50° C. for 5 minutes to 60 minutes. Preferably, the reaction is carried out at room temperature for 10 minutes to 15 minutes.

The modification of the surface of the silicon oxide particles with the reaction products of a compound of trivalent aluminium (e.g., aluminium chlorohydrate) with at least one aminoorganosilane is a faster process than the surface modification of silicon oxide particles with aluminium chlorohydrate. Accordingly, the modification time may be shortened or the modification temperature may be lowered in the case where the surface of the silicon dioxide is modified with the reaction products of a compound of trivalent aluminium (e.g., aluminium chlorohydrate) with at least one aminoorganosilane.

Of the silicon oxide particles available, particles of fumed silicon dioxide are particularly preferred for the surface modification with the reaction products of a compound of trivalent aluminium (e.g., aluminium chlorohydrate) with at least one aminoorganosilane.

Instead of a single fumed silicon dioxide powder, a mixture of different silicon dioxide powders having different sizes of the primary particles may be used. The modification step with the reaction products of a compound of trivalent aluminium (e.g., aluminium chlorohydrate) with at least one aminoorganosilane may be carried out individually for each silicon dioxide powder or simultaneously with the mixture of the different silicon dioxide powders.

If the modification step is carried out at high shear rates, the reaction products are regularly distributed on the surface of the silicon dioxide. Furthermore, the rheological behaviour of the dispersion is improved.

Preferred compounds of trivalent aluminium are aluminium chloride, aluminium nitrate, aluminium acetate, aluminium formiate, aluminium lactate and aluminium chlorohydrate.

According to a further aspect of the invention, the silicon oxide particles may further comprise at least an aluminium-zirconium hydrate complex. Preferably, in the aluminium-zirconium hydrate complex, the ratio of zirconium to aluminium is from 1:1 to 1:7. Preferred aluminium-zirconium hydrate complexes are selected from the group consisting of aluminium zirconium trichlorohydrate (CAS 98106-53-7), aluminium zirconium tetrachlorohydrate (CAS 98106-52-6), aluminium zirconium pentachlorohydrate (CAS 98106-54-8) or aluminium zirconium octachlorohydrate (CAS 98106-55-9). These complexes may be synthesized according to the procedures provided in US 3,903,258 or US 5,179,220, or purchased commercially (Rezal 67, Summit Reheis Co or Zirconal L540, BK Giulini GmbH, Ludwigshafen, Germany). According to a further aspect of the invention, the silicon oxide particles may comprise at least a compound selected from the group consisting of the reaction products of at least one of the aforementioned aluminium-zirconium hydrate complexes with at least one aminoorganosilane.

Suitable aminoorganosilanes are aminoorganosilanes of formula (I)

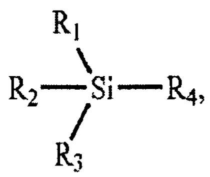

(I)

wherein $R_1$, $R_2$, $R_3$ independently represent hydrogen, hydroxyl, unsubstituted or substituted alkyl radicals having from 1 to 6 carbon atoms, unsubstituted or substituted aryl radicals, unsubstituted or substituted alkoxyl radicals having from 1 to 6 carbon atoms or unsubstituted or substituted aryloxyl radicals. $R_4$ represents an organic moiety substituted by at least one primary, secondary or tertiary amino group.

Condensation products of aminoorganosilanes may also be used in place of aforementioned monomeric aminoorganosilanes. The condensation reactions may occur between identical or different aminoorganosilanes.

Numerous of the known aminoorganosilanes enter into the consideration of those skilled in the art. Preferred aminoorganosilanes for the surface modification of fumed silicon dioxide resulting in silicon oxide particles having a positively charged surface are 3-aminopropyltrimethoxysilane, N-(2-aminoethyl)-3-aminopropyltrimethoxysilane, (3-triethoxysilylpropyl)-diethylentriamine, 3-aminopropyltriethoxysilane, N-(2-amino-ethyl)-3-amino-propyltriethoxysilane, (3-triethoxysilylpropyl)-diethylenetriamine, n-butylaminopropyltrimethoxysilane, 3-aminopropyltrimethoxysilane and mixtures of at least two of these aminoorganosilanes. More preferred aminoorganosilanes are n-butylaminopropyltrimethoxysilane, 3-aminopropyltrimethoxysilane or a combination of the two.

In a further preferred aspect of the invention, the aminoorganosilane is reacted in solution with $CO_2$ under formation of an ammoniumorganosilane (i.e., protonated species of an aminoorganosilane) and hydrogen carbonate, before it is added to the solution of the trivalent aluminium compound (e.g., aluminium chlorohydrate). In this way, the pH of the reaction mixture containing the reaction products of a compound of trivalent aluminium (e.g., aluminium chlorohydrate) with at least one aminoorganosilane is lowered and the buffer capacity of the mixture is increased. The formation of undesirable, partially insoluble aluminium by-products of very high molecular weight can be reduced using this procedure.

A silicon oxide particle, the surface of which has been modified by a treatment with the reaction products of at least one tetravalent zirconium compound (e.g., zirconium oxychloride, zirconium carbonate, zirconium acetate, zirconium lactate), preferably at least one tetravalent zirconium compound reacted with at least one aminoorganosilane, or at least one tetravalent zirconium compound combined with at least one trivalent aluminium compound of the above and both reacted with at least one aminoorganosilane, is another preferred silicon oxide particle having a positively charged surface according to the invention.

The preparation of such surface modified silicon oxide particles is performed similar to the aforementioned preparation of surface modified silicon oxide particles modified with the reaction product of a trivalent aluminium compound, but instead of the trivalent aluminium compound a tetravalent zirconium compound, or at least one tetravalent zirconium compound reacted with at least one aminoorganosilane, or at least one tetravalent zirconium compound combined with at least one trivalent aluminium compound of the above and reacted with at least one aminoorganosilane, is used.

According to a further aspect of the invention, the PCS layer comprises an amount of silicon oxide particles having a positively charged surface in a range of from 0.5 $g/m^2$ to 25 $g/m^2$, preferably from 1 $g/m^2$ to 20 $g/m^2$, or from 2 $g/m^2$ to 15 $g/m^2$, or from 3 $g/m^2$ to 10 $g/m^2$, or from 3 to 8 $g/m^2$. Aforementioned amounts are usually determined at 50 % relative humidity and 20 °C.

According to a further aspect of the invention, the PCS layer has a thickness of from 1 $\mu$m to 50 $\mu$m, preferably 5 $\mu$m to 25 $\mu$m, or from 10 $\mu$m to 20 $\mu$m. The thickness of the PCS layer is determined perpendicular to the plane of the PCS layer at 50 % relative humidity and 20 °C.

According to a further aspect of the invention, the PCS layer comprises at least one binder. Numerous types of the binders known in the art enter into the consideration of the skilled person.

Suitable Binders are often water-soluble polymers. Especially preferred are film-forming polymers.

A preferred group of binders are water-soluble polymers that are natural polymers and modified products thereof, such as gelatin, starchhydroxymethyl cellulose, hydroxyethyl cellulose, carboxymethyl cellulose, or combinations of at least two of these polymers.

Further, a combination of at least two of the aforementioned natural binders may be used.

A second preferred group of binders are water-soluble polymers that are synthetic binders. Of these, the following synthetic binders are preferred: polyvinyl alcohol, polyvinyl pyrrolidone, completely or partially saponified products of copolymers of vinyl acetate with other monomers; homopolymers or copolymers of unsaturated carboxylic acids such as maleic acid, (meth)acrylic acid or crotonic acid and the like; homopolymers or copolymers of sulfonated vinylmonomers such as vinylsulfonic acid, styrene sulfonic acid; homopolymers or copolymers of vinylmonomers of (meth) acrylamide; homopolymers or copolymers of other monomers with ethylene oxide; polyurethanes; polyacrylamides; water-soluble nylon type polymers; polyesters; polyvinyl lactams; acrylamide polymers; substituted polyvinyl alcohol; polyvinyl acetals; polymers of alkyl and sulphoalkyl acrylates and methacrylates; hydrolysed polyvinyl acetates; polyamides; polyvinyl pyridines; polyacrylic acid; copolymers with maleic anhydride; polyalkylene oxides; copolymers with methacrylamide and copolymers with maleic acid. Derivatives of the aforementioned polymers are also preferred.

A preferred synthetic binder is polyvinyl alcohol. Polyvinyl alcohol with a degree of hydrolysis between 70% and 99%, in particular between 88% and 98%, and a weight average molecular weight between 14,000 g/mol and 300,000 g/mol, in particular between 100,000 g/mol and 200,000 g/mol, is preferred; another preferred aspect of the invention are mixtures of at least two polyvinyl alcohols which differ in at least one of the properties selected from the group consisting of: degree of hydrolysis, weight average molecular weight, or both. Properties, such a weight average molecular weight and degree of hydrolysis are provided as technical information by the manufacturer of the polyvinyl alcohol.

According to another preferred aspect of the invention, a combination of at least two of the aforementioned synthetic binders may be used. Further, a combination of at least one of the aforementioned synthetic binders and at least one of the aforementioned natural binders may be used.

According to another aspect of the invention, the binder may be blended with water insoluble natural or synthetic high molecular weight compounds, such as acrylate latices or with styrene acrylate latices. Accordingly, water insoluble

polymers may be used as binder, or at least as part of a binder of the invention.

Another preferred group of binders are reactive polymers. Reactive polymers in the context of this invention are polymers having functional groups, which functional groups are capable of forming covalent bonds with at least one of the items selected from the group consisting of: neighboring polymer molecules, the surface of nanoparticles, or with a combination of both thereof. Particularly preferred reactive polymers are silanol-modified polyvinyl alcohols, e.g. Poval R-polymers (such as R-1130, R-2105 and R-3109, all provided by Kuraray Europe GmbH, Frankfurt, Germany), carbonyl-modified polyvinyl alcohols, e.g. Poval D-polymers (such as DF-05, DF-17 and DF-20, all provided by Kuraray Europe GmbH), carboxyl-modified polyvinyl alcohol, e.g. Poval A-polymers (such as AP-17, AT-17 and AF-17, all provided by Kuraray Europe GmbH), or a combination of at least two of the aforementioned reactive polymers. Further, a combination of at least one of the aforementioned reactive polymers and at least one of the aforementioned natural or synthetic binders may be used.

Preferably, the binder is selected from the group consisting of polyvinyl alcohol and its derivatives, gelatine and its derivatives, polyvinyl pyrrolidone and its derivatives and mixtures of at least two aforementioned binders.

According to another preferred aspect of the invention, an intermediate layer is arranged between the PCS layer and the layer structure. That way, the substrate layer is connected to the intermediate layer by aforementioned means and techniques. Independently from the type of the previously mentioned connection, the intermediate layer is also connected to the PCS layer by aforementioned means and techniques. Numerous types of intermediate layers and possible uses of such an intermediate layer enter into the consideration of those skilled in the art. For example, the intermediate layer could comprise at least a binder, preferably one or more of the aforementioned binders.

According to another aspect of the invention, the intermediate layer has a refractive index, which is between the refractive index of the substrate layer and the refractive index of the PCS layer.

According to another aspect of the invention, the molar ratio of aluminum (A1) : silicon (Si) in the PCS layer is in the range of from 0.1 to 10 mol-%, preferably 0.5 mol-% to 4 mol-%, each based on the number of moles of silicon. The amounts of the aforementioned chemical elements being present in the PCS layer can be determined by a number of techniques known to those skilled in the art. A preferred analytical method is elementary analysis.

According to another aspect of the invention, the molar ratio of zirconium (Zr) : silicon (Si) in the PCS layer is in the range of from 0.05 mol-% to 2 mol-%, preferably from 0.1 mol-% to 1 mol-%, each based on the number of moles of silicon. The amounts of the aforementioned chemical elements being present in the PCS layer can be determined by a number of techniques known to those skilled in the art. A preferred analytical method is elementary analysis.

According to another aspect of the invention the PCS layer of the layer structure is comprised of at least the following elements:

i) 65 - 85 % by weight of fumed silica, positively charged silica, or both;
ii) 0.5 - 10 % by weight of at last an compound comprising aluminium, zirconium or both;
iii) 2 - 10 % by weight of at least an aminoorganosilane;
iv) 5 - 20 % by weight of at least a binder;
v) 0.5 - 4 % by weight of at least a hardener;

wherein the fractions of i) to v) sum up to 100 %. A common method to determine these values is elementary analysis.

A hardener in the context of the present invention is a chemical component that crosslinks the binder to improve the strength of the layer.

Suitable hardeners are preferably selected depending on the type of water-soluble polymers to be hardened. Preferred hardeners are either organic hardeners or inorganic hardeners.

Organic hardeners are preferably selected from the group consisting of aldehydes, e.g. glyoxal, formaldehyde or glutaraldehyde; dioxanes, e.g. 2,3-dihydroxydioxane; reactive vinyl compounds; reactive halogen compounds; epoxydes; aziridines; N-methylol compounds, e.g. dimethylhydantoin; and dihydrazides, e.g. adipoyl dihydrazide; or a combination of two or more thereof.

Inorganic hardeners are preferably selected from the group consisting of chromium alum, aluminium alum, zirconium compounds, bivalent metal cations and boron compounds, e.g. borax or boric acid. A preferred boron compound is boric acid.

According to another aspect of the invention, a combination of at least two of the aforementioned organic or inorganic hardeners may be used, e.g. one organic and one inorganic compound, or two organic compounds, or two inorganic compounds, each depending on the water-soluble polymers used in the PCS layer.

According to another aspect of the invention, the PCS layer of the layer structure has the lowest refractive index of all layers in the layer structure.

According to another aspect of the invention, the layer structure comprises two or more PCS layers, wherein the refractive indices of at least two, preferably of all PCS layers is lower than the refractive index of any other layer in the layer structure.

According to another aspect of the invention, the layer structure comprises at least one further layer adjacent to the PCS layer, wherein the refractive index of the at least one further layer is at least 0.2 refractive index units (RIU), or at least 0.3 RIU, or at least 0.4 RIU higher than the refractive index of the PCS layer. Preferably, all layers connected to the PCS layer have an refractive index, which is at least 0.2 refractive index units (RIU), or at least 0.3 RIU, or at least 0.4 RIU higher than the refractive index of the PCS layer.

According to a further aspect of the invention, the layer structure comprises one or more adhesion promoting layers. Numerous types of adhesion promoting layers are known in the art enter into the consideration of the skilled person. Preferably at least one, yet more preferably all of the adhesion promoting layers of the layer structure comprise one or more of the binders mentioned above. According to another preferred aspect of the invention, an adhesion promoting layer may be arranged on the substrate layer. Numerous types of adhesion promoting layers are known in the art enter into the consideration of the skilled person, in particular those, which are used in the photographic industry. Preferably, adhesion to the substrate may be improved by a corona discharge treatment or a corona-aerosol treatment.

According to another aspect of the invention, the layer structure comprises, adjacent to each other:

(a1) the substrate layer;
(b1) the PCS layer; and
(c1) at least four further layers,
which first of the further layer is adjacent to the PCS layer,
wherein the refractive index of each of the further further layers is at least 0.01 refractive index units, preferably at least 0.02 refractive index units higher than the refractive index of the precedent layer, and
wherein the difference in refractive index between the outermost further layer and the PCS layer is at most 0.6 refractive index units, preferably at most 0.5 refractive index units or at most 0.4 refractive index units.

According to another aspect of the invention, the layer structure comprises, adjacent to each other:

(a1) the substrate layer;
(b1) at least four further layers; and
(c1) the PCS layer;
which first of the further layer is adjacent to the substrate layer,
wherein the refractive index of each of the further further layers is at least 0.01 refractive index units, preferably at least 0.02 refractive index units lower than the refractive index of the preceding layer, and
wherein the difference in refractive index between the PCS layer and the first further layer is at most -0.6 refractive index units, preferably at most -0.5 refractive index units or at most -0.4 refractive index units.

According to another aspect of the invention, the average direct transmission of the PCS layer is more than 90 %, more than 94 %, more than 95 %, more than 96 %, more than 97 % or more than 98 %. Accordingly, the average direct transmission of the PCS layer is in the range of from 90 to 99.99 %, preferably in the range of from 94 to 99.9 %, from 95 to 99,9 %, from 96 to 99,9 %, from 97 to 99,8 % or from 98 to 99,5 %.

The average direct transmission is measured according to the method described below using light of distinct wavelengths between $\lambda$ = 350 nm to $\lambda$ = 800 nm. For each collected data point, the wavelength of light differed from the previous measurement in delta$\lambda$ = 1 nm. The average direct transmission is defined as the mean average of the values of the data collected in these measurements.

According to another aspect of the invention, the average diffuse transmission of the PCS layer is less than 4 %, preferably less than 3.5 %, less than 3 %, less than 2.5, or less than 2.0 %. Usually, a diffuse transmission of the PCS layer of .2 %, or 0.5 %, or more remains.

The diffuse transmission is measured according to the method described below using light of distinct wavelengths between $\lambda$ = 350 nm to $\lambda$ = 800 nm. For each collected data point, the wavelength of light differed from the previous measurement in delta$\lambda$ = 1 nm. The average diffuse transmission is defined as the mean average of the values of the data collected in these measurements.

According to another aspect of the invention, the PCS layer of the layer structure comprises at least one further sort of particles, wherein the further sort of particles are preferably either pigments or light diffusing particles, or a combination of both. The at least one further sort of particles are preferably either inorganic particles or organic particles. Numerous of the known inorganic particles enter into the consideration of those skilled in the art. Preferably, the inorganic particles are selected from the group consisting of titan dioxide, more preferably rutile or anatase, zinc dioxide, zinc sulfide and barium sulphate, or a combination of two or more thereof. Preferably, the organic particles are porous or non-porous.

The term diffusing particles in the context of the present invention refers to particles of such a size and/or shape that light of a wavelength $\lambda$ of from 350 nm to 800 nm is at least partially scattered at said particles, whereby the amount

of light scattered at said particles is preferably at least 10 % with respect to the total amount of light in the range of from 350 nm to 800 nm entering the layer comprising said particles.

A PCS layer, which further comprises at least a further sort of aforementioned particles, of which the further sort of aforementioned particles is larger in average particle diameter than the average particle diameter of the silicon oxide particles of the PCS layer, is also referred to as a structured layer.

According to another aspect of the invention, the layer structure comprises at least one layer, which layer has at least one patterned layer surface. A patterned layer surface in the context of the present invention is preferably obtained by embossing, etching or the like. Forming a structured layer, in which the further sort of aforementioned particles is larger than the average layer thickness is another kind of a patterned layer.

According to another aspect of the invention, the at least one further layer of the layer structure comprises a composition selected from the group consisting of fluoropolymer, polymers, magnesium fluoride, sodium fluoride or a combination of at least two thereof. Often, such a further layer has a refractive index of more than 1.2.

According to another aspect of the invention, the PCS layer may comprise further colorants, which colorants absorb light of wavelength in a range of from 200 nm to 2500 nm. These colorants are preferably either organic or inorganic compounds, or a combination of at least two thereof. Aforementioned colorants can be present either in form of molecules or in form of particles in the PCS layer.

According to another aspect of the invention, the PCS layer may further contain luminescent matter selected from the group consisting of organic molecules, organic pigments, organic polymers, inorganic particles, or nanoparticles containing luminescent compounds in their interior. Luminescent matter in the context of this invention emits light of wavelength in a range of from 200 nm to 2500 nm.

A further aspect of the invention is a process for preparing a layer structure having a substrate and a, preferably transparent, PCS layer comprising at least the process steps:

(I) providing a substrate layer, which is preferably transparent;
(II) superimposing to the substrate layer a PCS layer,
wherein the PCS layer comprises a plurality of silicon particles,
wherein said silicon oxide particles have a positively charged surface;
(III) optionally superimposing at least one further layer onto the substrate layer.

Preferably, the refractive index of the PCS layer is less than 1.2. More preferably, the refractive index of the layer structure comprising the PCS layer and, if available, further layers, is less than 1.2.

Further preferred aspects of the process of the invention for preparing a layer structure, which aspects relate to the properties of components of the layer structure, such as the substrate layer, the PCS layer, its components and any other aspects that are described above in the context of the inventive layer structure according to the first aspect and further aspects of the invention are incorporated herein.

If a further layer is superimposed to the substrate layer, the further layer can be arranged in different ways relative to both, the substrate layer and the PCS layer. Accordingly, the further layer being superimposed to the substrate layer can be arranged

(i) so that the further layer and the substrate layer are arranged on opposite sides of the PCS layer;
(ii) so that the further layer is arranged between the substrate layer and the PCS layer; or (iii)so that the further layer and the PCS layer are arranged on opposite sides of the substrate layer.

Preferably, the further layer being superimposed to the substrate layer is arranged so that the further layer and the substrate layer are arranged on opposite sides of the PCS layer.

According to another aspect of the invention, step (II) of the process is performed by at least the following steps:

i. preparing a liquid phase comprising a plurality of silicon oxide particles having a positively charged surface and at least one liquid;
ii. coating the liquid phase with amount in the range of from 4 to 200 g/m$^2$, preferably from 8 to 150 g/m$^2$, or from 15 to 125 g/m$^2$, from 25 to 80 g/m$^2$, or from 25 to 65 g/m$^2$ onto the substrate layer; and then
iii. drying the coating formed in step ii. resulting in the PCS layer (3).

According to a further aspect of the invention, the further layer is applied in step (II) of the process from a liquid phase, preferably a dispersion comprising the silicon oxide particles and a liquid. In the context of this invention, the term dispersion describes a system, in which a discontinuous phase of at least a first component are dispersed in a continuous phase of at least a further component. Often, the at least one component contributing to the discontinuous phase is particulate. The continuous phase is often not in the same physical state as the discontinuous phase. Both,

continuous and discontinuous phase, can independently of each other comprise one or more components.

The liquid phase comprising a plurality of silicon dioxide particles having a positively charged surface according to step i. can be accomplished, for example, by means of a conventional dispersion device such as Nanomizer®, Ultimizer®, Manton-Gaulin®, Ystral Conti®, Dyno-Mill® and the like. The aforementioned devices may be used alone or two or more types may be used in combination, in a parallel or sequential array.

Preferably, the at least one liquid in aforementioned liquid phase is water. According to another preferred aspect of the invention, the liquid phase comprises a mixture of more than one liquid, preferably at least two of the liquids, wherein, yet more preferred, more than 50 wt.-% of the liquid phase is water, the wt.-% based on the total weight of the liquid phase.. According to another preferred aspect of the invention, the liquid phase, which comprises at least two liquids selected from the aforementioned group, comprises at least 75 % by weight, preferably at least 80 % by weight, or at least 90 % by weight, or between 94 and 99.5 % by weight of water, each of the percentages based on the total weight of liquids ion the liquid phase.

Step ii. can be accomplished by means of extrusion coating, air knife coating, doctor blade coating, slot bead coating, slide bead coating and curtain coating. Preferred methods are slide bead coating and curtain coating. Preferably, step ii. is at least partially performed at temperatures of from 20°C to 60°C, or from 25°C to 50°C, or from 30°C to 40°C. Preferably, the coating process is carried out at a speed of about 20 to about 400 meters/min.

Step iii. can be performed at a temperature of from 2°C to 90°C, with a relative humidity of from 10% to 80%, for a time of from 30 seconds to 10 min. If step iii. comprises two or more sub-steps, the temperature, relative humidity and time may vary from step to step, each of them independently within the aforementioned temperature range, humidity range and time range.

According to another aspect of the invention, the silicon oxide particles of the process comprise at least a compound selected from the group consisting of trivalent aluminium compounds, tetravalent zirconium compounds, aminoorganosilane compounds, reaction products of at least one trivalent aluminium compound with at least one aminoorganosilane compound, reaction products of at least one tetravalent zirconium compound with at least one aminoorganosilane compound, reaction products of at least one trivalent aluminium compound and at least one tetravalent zirconium compound with at least one aminoorganosilane compound, and combinations thereof. Further preferred aspects are described with regard to the first aspect and further aspects of the invention and are incorporated herein. This applies also to the way, according to which the modification of silicon oxide particles can be performed.

Numerous of the known liquids, and also mixtures thereof, enter into the consideration as continuous phase of the aforementioned liquid phase. According to an aspect of the invention, the liquid is selected from the group consisting of water, alcohols, and mixtures thereof. Preferably, water is selected as liquid. Yet more preferred, the dispersion obtained from the surface modification of silicon oxide particles is used directly for the preparation of that dispersion, which is applied to form the further layer in step (II) of the process.

According to another aspect of the invention, the liquid phase contains less than 5 %, preferably less than 2 % of volatile organic solvents. Volatile organic solvents in the context of this invention are organic compounds, which are liquid at 20 °C, 1013 hPa, and either have an initial boiling point of less than 250 °C or a vapor pressure of more than 0.27 kPa (2 mm Hg) at 25 °C, or both.

According to another aspect of the invention, the liquid phase comprises at least one binder. Further preferred aspects are described with regard to the first aspect of the invention and incorporated herein.

According to a further aspect of the invention, the liquid phase of the process may comprise additional components, such as pH regulating substances, antioxidants, stabilizers, anti-fouling agents, preservatives, plasticisers, rheology modifiers such as thinners and/or thickeners, film forming agents, fillers. Aforementioned additional components of the liquid phase of the process may be added to the liquid phase as aqueous solutions. If one or more of these compounds are not sufficiently water-soluble, they may be incorporated into the liquid phase by other common techniques known in the art, e.g., these compounds may be dissolved in a water miscible solvent such as lower alcohols, glycols, ketones, esters, or amides. Alternatively, the compounds may be added to the liquid phase of the process as fine dispersions, as emulsion, or as cyclodextrine inclusion compounds, or incorporated into latex particles yet forming a further group of particles in the liquid phase of the process.

In the art, numerous techniques are known to apply a layer comprising particles to a substrate layer. Accordingly, those skilled in the art will identify appropriate techniques for applying a PCS layer comprising a plurality of silicon oxide particles to the substrate layer in step (II) of the process.

According to a further aspect of the invention, the PCS layer, and optionally further layers, are applied in process step (II) by extrusion coating, air knife coating, doctor blade coating, cascade coating or curtain coating. The PCS layer, and optionally further layers, may also be applied using spray techniques. Moreover, additional layers may be built up onto the PCS layer from several individual layers that may be coated one after the other or simultaneously. It is further possible to coat the substrate layer on more than one surface with a PCS layer, a further layer or additional layers, or a combination of at least two thereof. It is further preferred to coat an antistatic layer or an anticurl layer on the side of the substrate layer, which is facing away from the PCS layer. Preferred coating procedures to apply the PCS layer, and

optionally further layers, in step (II) are cascade coating or curtain coating, wherein the PCS layer, optionally further layers and possibly other additional layers are coated simultaneously onto the substrate layer. It is further preferred to perform the coating step in the inventive process either in a single-layer coating, to coat two or more single-layer coatings performed in series, but also to perform a simultanous multilayer coating in one-pass. The cited coating methods, however, are not to be considered limiting the invention.

A further aspect of the invention is a layer structure obtainable by the a process for preparing a layer structure as described above.

According to a further aspect of the invention, the layer structure comprises

(a) a substrate layer; and
(b) a PCS layer at least partially superimposed to the substrate layer comprising a plurality of silicon oxide particles having a positively charged surface,
wherein the refractive index of the PCS layer is less than 1.2.

Preferred aspects described in the context of the aforementioned process for preparing a layer or in the context of the aforementioned layer structure are incorporated herein.

According to a further aspect of the invention, the pore volume of the PCS layer of the layer structure is in the range of from 55 to 80 %-Vol., based on the total volume of the layer.

According to a further aspect of the invention, the PCS layer of the layer structure is a transparent layer, an thermally insulating layer, a low refractive index layer, or a combination of at least two thereof.

A further aspect of the invention is an optical device comprising aforementioned layer structure, or a preferred aspect of aforementioned layer structure.

Preferably, the optical device is selected from the group consisting of light emitting devices, light guiding devices, light converting devices light recording devices and electrically insulating layers, or a combination of two or more thereof.

Numerous of the known optical devices selected from the above mentioned groups enter into the consideration of those skilled in the art. Preferred light emitting devices are selected from the group consisting of panel lighting, flat panel lighting, flood lights, head lights, spotlights and electronic displays. Preferred light guiding devices are selected from the group consisting of planar and non-planar light guides. Preferred light converting devices are selected from the group consisting of color converters and color filters. Further preferred optical devices are anti-reflection devices and light-diffusing devices. Further, systems combining two or more of the aforementioned optical devices may be selected. Of these, systems such as displays, cameras and projectors are preferred.

A further aspect of the invention is a use of a layer having silicon oxide particles with a positively charged surface for optical applications, in particular for opto-electronic applications.

The following Examples serve for exemplary elucidation of the invention and are not to be interpreted as a restriction.

DESCRIPTION OF THE FIGURES

The subject matter of the invention is exemplified in the figures. The figures, however, are not intended to limit the scope of the invention or the claims in any way.

Referring to Figure 1, a layer structure (1) is shown. The layer structure comprises a substrate layer (2) and a PCS layer (3). The PCS layer comprises silicon oxide particles (4).

Referring to Figure 2, another layer structure (1) is shown. As in Figure 1, the layer structure comprises a substrate layer (2) and a PCS layer (3). The PCS layer comprises silicon oxide particles (4). In a preferred aspect (optional), an intermediate layer (5), such as an adhesion promoting layer, can be arranged between the substrate layer (2) and the PCS layer (3). In a further preferred aspect (optional), an additional layer (6), such as an luminescence layer or a diffusing layer or the like, can be arranged on the side of the PCS layer, which is facing away from the substrate layer (2).

In Figure 3, the process of the invention is shown.

In Figure 4, an optical device (7) of the invention is shown. The optical device (7) comprises a layer structure (1). The optical device (7) and the layer structure (1) are positioned on a light path (9). The optical device (7) may further comprise openings (8), through which light can pass on the light path (9) through the optical device (7).

In Figure 5, another layer structure (1) is shown. As in Figure 1, the layer structure comprises a substrate layer (2) and a PCS layer (3). The PCS layer comprises silicon oxide particles (4). This layer structure comprises four further layers (6,10), including an "outmost" further layer (10). With reference to the preceding layer, each further layer (6, 10) has a refractive index, which is 0.02 refractive index units higher than the refractive index of the precedent layer. The refractive index of the outmost further layer (10) is 0.08 refractive index units higher than the refractive index of the PCS layer (3).

TEST METHODS

A. SPECIFIC SURFACE

The specific surface area is determined by the BET isotherm method, as described by S. Brunauer, P.H. Emmet and J. Teller in "Adsorption of Gases in Multimolecular Layers", Journal of the American Chemical Society 60, p. 309-319 (1938).

B. PARTICLE SIZE

Particle size distribution is determined with a disc centrifuge CPS DC24000, using a gradient from 8wt.-% to 24wt.-% sucrose. After the gradient is established, a calibration standard *(PVC calibration standard 0.377μm in deionised water,* provided by CPS Instruments, Inc.) is injected into the centrifuge disc rotating at 20000rpm.

Once the calibration is done, the investigated dispersion is injected into the centrifuge disc (20000rpm) at a concentration of 0.5wt.-%. The graph indicates the particle size (in μm) on the x-axis and the weight distribution in wt.-% on the γ-axis. The median particle size $d_{50}$ (in nm) is obtained from the integral of the weight distribution curve. The polydispersity index (PDI) of the sample is calculated from the ratio between the weight average diameter ($D_w$) and the number average diameter ($D_n$):

$$PDI = \frac{D_w}{D_n} \quad with \quad D_w = \frac{\sum D_i^2 N_i}{\sum D_i N_i} \quad and \quad D_n = \frac{\sum D_i N_i}{\sum N_i}$$

$N_i$ being the number of particles of diameter $D_i$.

The calculations of the $d_{50}$-diameter and the polydispersity index are performed automatically by the CPS software.

C. THICKNESS OF AN ITEM, E.G. A LAYER, A LAYER STRUCTURE

For each sample, a thin cut was obtained with a Leica RM2245 rotary microtome equipped with a low profile blade Leica 819. The width of the thin cut is 35μm. The thin cut was then examined with an optical microscope Zeiss Axiophot and a Zeiss Epiplan Neofluar 20x objective. Pictures were taken with a JVC KY-F70B Tri-CCD camera (1360x1024 pixel resolution) and the layer thickness was determined with the software analySIS 3.1 provided by Soft Imaging System. The precision of the thickness measurement is ±1um. Among several samples for each example, only those with a layer thickness in the range 14-17μm qualified for further evaluation.

D. ZETA POTENTIAL AND ISOELECTRIC POINT

The zeta-potential titration is carried out on a Dispersion Technology DT1200 instrument. The "sample chamber" consists of a 100ml-beaker, a magnetic stirrer, two injection pipes and five sensors: acoustic, cvi (colloid vibration current), temperature, pH and conductivity. The zeta-potential is obtained by the cvi and acoustic sensors. The measurement is performed at room temperature and the silica dispersions are diluted to 2wt.-% $SiO_2$ to avoid gelation around the isoelectric point. The starting point of the titration curve is the dispersion pH, and depending on it, either hydrochloric acid 0.1mol/L or sodium hydroxide 0.1mol/L are added via the injection pipes. The titration is carried out from the starting pH to around pH 11 for the dispersions of positively-charged silica, and from the starting pH to around pH 3 for the dispersions of anionic silica. The zeta-potential in mV at pH 5 and the isoelectric point are read from the graph of the zeta-potential as a function of pH.

E. PORE VOLUME

The pore volume in the layer is obtained via a three step method based on liquid absorption abilities of porous materials, as described below. This pore volume can be filled by air, or any other gas.

*First step: raw liquid absorption*

For each example, three A3 sheets of a base were coated with the same procedure as described in the examples below, but with a wet coat weight of 140g/m$^2$ on a resin-coated base for inkjet media (available from Schoeller GmbH

& Co. KG, Osnabrück, Germany, thickness 252μm, weight (263±5) g/$m^2$, subcoated with a 71mg/$m^2$ gelatin coating). After drying in an oven for 60 minutes at 30 °C, an A4 sheet was cut out of the middle of each of the coated A3 sheets. These A4 sheets were conditioned in an oven at 40°C for 24hrs. Then, the three A4 sheets were weighed on a laboratory balance Mettler PM-3600 Delta Range and the average weight per square meter of A4 samples of the coated base was calculated.

Then, 10 A4 sheets cut out of the base (as delivered) were weighted in the aforementioned way to obtain the average weight of an A4 sheet of the base. The average weight per square meter of the base is 265.3g/$m^2$.

The average weight of the dried layer was obtained by subtracting the average weight of the A4 sheet of the base from the average weight of the coated A4 sheets. From the average weight of the dried layer and the composition of the layer, the average weight of silica per coated A4 sheet was determined and the average weight of silica per square meter of the coated sheet was calculated.

Each of the three A4 sheets of the coated base were then passed through a solution of 30wt.-% of ethylene glycol in deionised water with a motorized device equipped with two series of rotating squeezing rolls. The A4 sheets of the coated base were inserted between the rolls of the first series and pushed in the liquid. When the sheets were completely immerged in the liquid, the second series of rolls pulled them out and removed the excess of liquid. The sheets were then weighted again. An average value was calculated from the three results. This is the average weight of the coated base and the absorbed liquid. The average weight of the absorbed liquid (without the coated base) is then obtained by subtracting the average weight of the dried coated base, which was previously obtained. The average volume of absorbed liquid per square meter of the coated base was finally calculated from the density of the absorbed liquid (1.038g/$cm^3$).

*Second step: absorption of liquid by the base and the binder*

Since the PVA binder as well as the backside and the front side of the coated base absorb some of the liquid, a second series of 10 A3-samples were prepared in the same way as previously described, but with a coating of 5.88g/$m^2$ Poval PVA 235 (polyvinyl alcohol binder, Kuraray Europe GmbH, 87-89% hydrolysis grade, high polymerization grade) and 1.03g boric acid. After drying in an oven for 60 minutes at 30 °C, an A4 sheet was cut in the middle of each A3 coated sample. The 10 A4 sheets were conditioned in an oven at 40°C for 24hrs. The 10 A4 sheets were then submitted to the same absorption procedure as before and an average volume per square meter of absorbed liquid by the front side, the backside and the PVA layer was obtained.

Further, a third series of 10 samples of the base (as delivered) were submitted to the absorption test. This yielded the weight of the absorbed liquid by the front side and the backside of the sheet. From that value, the average volume per square meter of the liquid absorbed by the front side and the backside of the uncoated base was obtained. By subtracting the average volume of the absorbed liquid of the third series (back side + front side) from the average volume of the absorbed liquid of the second series (back side + front side + PVA), the average volume of liquid absorbed by the PVA binder was obtained. From that value, the average volume of absorbed liquid per gram of PVA binder was calculated as 0.19ml/g PVA. Depending on the amount of binder in the layer, the average volume per square meter of the liquid absorbed by the PVA binder was determined for each example.

*Third step: air volume of the dried layer*

For each sample, the average volume of the liquid absorbed by the pores of the layer was then obtained by subtracting the average volume of liquid absorbed by the PVA binder and the average volume absorbed by the backside and the front side of the uncoated base from the total volume of the absorbed liquid obtained in the first series. From that value, the average air volume per gram of silica in the dried layer was finally calculated.

F. REFRACTIVE INDEX

The refractive index $n_D^{20}$ was calculated from the volume fraction and the refractive index $n_D^{20}$ of each component (including air):

$$\textit{Refractive index } n_D^{20} \textit{ of layer} = \Sigma \textit{ (volume fraction of component } X * \textit{refractive index of } X)$$

The calculation of the refraction index $n_D$ (at 20 °C, Na-D-line) of the layer in Example 1 (see below) is exemplified based on the data provided in the following table:

| Layer composition | Weight g/$m^2$ | Density g/$cm^3$ | Volume $cm^3/m^2$ | Volume fraction | $n_D^{20}$ |
|---|---|---|---|---|---|
| Fumed silica 300$m^2$/g | 8.25 | 2.20 | 3.75 | 0.23 | 1.459 |
| Aluminium chlorohydrate | 0.10 | 2.42 | 0.04 | 0.00 | 1.577 |
| Aminosilane | 0.87 | 0.95 | 0.92 | 0.06 | 1.43 |
| Binder | 1.24 | 1.25 | 0.99 | 0.06 | 1.53 |
| Boric acid | 0.14 | 1.44 | 0.10 | 0.01 | 1.456 |
| Surfactant | 0.05 | 0.95 | 0.05 | 0.00 | 1.51 |
| Air | | | 10.15 | 0.63 | 1.001 |

Accordingly, the refractive of the layer of Example 1, which has a pore volume of the dried layer of 10.1 $cm^3/m^2$ an air volume of 63 %-Vol. is:

$$n_D^{20}\ (\text{layer}) = (0.23*1.459 + 0*1.577 + 0.06*1.43 + 0.06*1.53 + 0.01*1.456 + 0.0*1.51 + 0.63*1.001) = 1.17$$

G. TRANSMISSION MEASUREMENTS

Transmission measurements were carried out with a spectrophotometer Varian Cary 100 bio equipped with an integration sphere Labsphere DRA-CA-301. The spectral range of the transmission measurements was 350-800nm, with a resolution of 1nm.

An integration sphere was used for measuring the transmission of the samples in total transmission mode and in diffuse transmission mode. For the measurement of the total transmission, the integration sphere was equipped with a Spectralon diffuser. For the measurement of the diffuse transmission, the integration sphere was equipped with a light trap. The direct transmission (transmission perpendicular to the sample) was obtained by subtracting the diffuse transmission from the total transmission.

The total and the diffuse transmission values were corrected for the absorption of light by the PET base material.

The direct transmission was corrected for slight variations of the sample thickness using an equation derived from the Beer-Lambert law:

$$T(direct)_{corr.} = \left[\left(\frac{T(direct)}{100}\right)^{\left(\frac{Thickness_{reference}}{Thickness_{sample}}\right)}\right] \bullet 100$$

The thickness of the reference is 16μm (corresponding to the thickness of Example 1 and Comparative Example 1).

H. VISCOSITY

Viscosity measurements were performed with a Bohlin CVO-50 rheometer at a shear rate of 227$s^{-1}$ and a temperature of 40°C.

I. pH

The pH was measured at 40°C with a standard combined glass pH-electrode.

EXAMPLES

Example 1

*Aqueous dispersion containing 24wt.-% of positively charged $SiO_2$*

3.51g of aluminium chlorohydrate (Locron P, available from Clariant AG, Muttenz, Switzerland), 4.1 g boric acid, 18.4g of a 10wt.-% solution of formic acid and 26.0g of n-butylaminopropyltrimethoxysilane (Dynasilan 1189, 98%, available from Degussa AG, Düsseldorf, Germany) were sequentially added to 695.4 g of deionised water under mechanical stirring at 5°C. Stirring was continued during 15 minutes. To this dispersion, 240g of fumed silicone dioxide with a specific surface of 300m$^2$/g (Cab-O-Sil H5, available from Cabot Corp., Billerica, USA) were added at 5°C under vigorous mechanical stirring. Thereafter, 12.63g of a 5wt.-%-solution of ammonium hydrogen carbonate (Fluka AG, Buchs, Schweiz) were added to the dispersion under continuous mechanical stirring. This dispersion was further stirred for 10 minutes with a rotor-stator high-shear mixer. The temperature was raised to 40°C during 15 minutes, then the dispersion was allowed to cool to room temperature. Finally, the dispersion was passed at 1.5liters/h through a bead-mill Dyno-Mill Multi-Lab (WAB AG Maschinenfabrik) filled at 45 %-Vol. with zirconium oxide beads having a diameter of 0.8-1.0mm.

The properties of this dispersion are presented in the table below:

| | |
|---|---|
| pH/40°C | 5.6 |
| Viscosity at 227s$^{-1}$/ 40°C | 92mPas |
| $d_{50}$-particle diameter (CPS) | 53nm |
| Polydispersity (CPS) | 1.58 |
| zeta-potential at pH 5 | 42mV |
| Isoelectric point | pH 8.9 |

*Coating solution containing 14.8wt.-% positively charged silica*

To 123.3 g of the dispersion described above were added at 40°C 63.4g of a 7 wt.-% solution of Poval PVA 235 (polyvinyl alcohol binder, Kuraray Europe GmbH, 87-89% hydrolysis grade, high polymerization grade), 2.88g of a 5.26wt.-%-solution of the surfactant Olin G (Arch Chemicals, Norwalk, USA) and 10.5g deionised water. The pH of this coating solution was 5.45 and its viscosity at 227s$^{-1}$ was 98mPas. The ratio between the PVA binder and silica is 15: 100 (wt./wt.).

*Base*

The "base" is a transparent polyester support (Agfa P175, thickness 175μm) delivered by the supplier with a gelatin adhesion-promoting layer of 400mg/m$^2$.

*Coating onto a transparent polyester base.*

50g/m$^2$ of this coating solution were coated at 40°C onto A3 sheets of the aforementioned base. The coated base was then dried for 60 minutes at a temperature of 30°C. An A4 sheet was cut in the middle of the A3 sheet and put in an oven at 40°C for 24 hours to complete the hardening process. The thickness of the dried layer is 16.0μm. The pore volume of the dried layer is 10.1cm$^3$/m$^2$ (which corresponds to 63% air volume) and the calculated refractive index $nD^{20}$ is 1.17.

Example 2

*Aqueous dispersion containing 25wt.-% of positively charged $SiO_2$*

12.78g of aluminium chlorohydrate (Locron P, available from Clariant AG, Muttenz, Switzerland) and 21.0g of n-butylaminopropyltrimethoxysilane (Dynasilan 1189, 98%, available from Degussa AG, Düsseldorf, Germany) were sequentially added to 716.2g of deionised water under mechanical stirring at 5°C. Stirring was continued during 15 minutes. To this solution, 250g of fumed silicone dioxide with a specific surface of 300m$^2$/g (Cab-O-Sil H5, available

from Cabot Corp., Billerica, USA) were added at 5°C under vigorous mechanical stirring. This dispersion was further stirred for 10 minutes with a rotor-stator high-shear mixer. The temperature was raised to 50°C during 60 minutes, then the dispersion was allowed to cool to room temperature. Finally, the dispersion was passed at 1.5liters/h through a bead-mill Dyno-Mill Multi-Lab (WAB AG Maschinenfabrik) filled at 45%-Vol. with zirconium oxide beads having a diameter of 0.8-1.0mm.

The properties of this dispersion are presented in the table below:

| | |
|---|---|
| pH/40°C | 5.3 |
| Viscosity at 227$s^{-1}$/40°C | 45mPas |
| $d_{50}$-particle diameter (CPS) | 53nm |
| Polydispersity (CPS) | 1.60 |
| zeta-potential at pH 5 | 43mV |
| Isoelectric point | pH 8.7 |

*Coating solution containing 14.8wt.-% positively charged silica*

To 118.4g of the dispersion described above were added at 40°C 580mg boric acid, 63.4g of a 7 wt.-% solution of Poval PVA 235 (polyvinyl alcohol binder, Kuraray Europe GmbH, 87-89% hydrolysis grade, high polymerization grade), 2.88g of a 5.26wt.-%-solution of the surfactant Olin G (Arch Chemicals, Norwalk, USA) and 14.7g deionised water. The pH of this coating solution was 4.71 and its viscosity at 227$s^{-1}$ was 70mPas. The ratio between the PVA binder and silica is 15:100 (wt./wt.).

*Base*

The base was the same as described in Ex. 1.

*Coating onto a transparent polyester base*

50g/$m^2$ of this coating solution were coated at 40°C onto A3 sheets of the aforementioned base. The coated base was then dried for 60 minutes at a temperature of 30°C. An A4 sheet was cut in the middle of the A3 sheet and put in an oven at 40°C for 24 hours to complete the hardening process. The thickness of the dried layer is 15.4μm. The pore volume of the dried layer is 9.8$cm^3/m^2$ (which corresponds to 63% air volume of the dried layer) and the calculated refractive index is 1.17.

<u>Comparative Example 1</u>

*Aqueous dispersion containing 13.5wt.-% of negatively-charged $SiO_2$*

135g of fumed silicone dioxide with a specific surface of 300$m^2$/g (Cab-O-Sil H5, available from Cabot Corp., Billerica, USA) were added at 5°C under vigorous mechanical stirring to 12.8g of a IN solution of sodium hydroxide and 852.2g deionised water. This dispersion was further stirred for 10 minutes with a rotor-stator high-shear mixer. The temperature was raised to 60°C during 60 minutes, then the dispersion was allowed to cool to room temperature. Finally, the dispersion was passed at 1.5liters/h through a bead-mill Dyno-Mill Multi-Lab (WAB AG Maschinenfabrik) filled at 45%-Vol. with zirconium oxide beads having a diameter of 0.8-1.0mm.

The properties of this dispersion are presented in the table below:

| | |
|---|---|
| pH/40°C | 8.2 |
| Viscosity at 227$s^{-1}$/40°C | 105mPas |
| $d_{50}$-particle diameter (CPS) | 96nm |
| Polydispersity (CPS) | 2.54 |
| zeta-potential at pH 5 | -12mV |
| Isoelectric point | 3.8 |

*Coating solution containing 10.0wt.-% negatively charged silica*

To 148.2g of the dispersion described above were added at 40°C 3.0g of a 4wt.-% solution of boric acid, 42.8g of a 7wt.-% solution of Poval PVA 235 (polyvinyl alcohol binder, Kuraray Europe GmbH, 87-89% hydrolysis grade, high polymerization grade), 2.88g of a 5.26wt.-%-solution of the surfactant Olin G (Arch Chemicals, Norwalk, USA) and 3.1g deionised water. The pH of this coating solution was 7.64 and its viscosity at 227$s^{-1}$ was 80mPas. The ratio between the PVA binder and silica is 15:100 (wt./wt.).

*Base*

The base was the same as described in Ex. 1.

*Coating onto a transparent polyester base*

75g/$m^2$ of this coating solution were coated at 40°C onto A3 sheets of the aforementioned base. The coated base was then dried for 60 minutes at a temperature of 30°C. An A4 sheet was cut in the middle of the A3 sheet and put in an oven at 40°C for 24 hours to complete the hardening process. The thickness of the dried layer is 16.0μm. The pore volume of the dried layer is 11.1 $cm^3/m^2$ (which corresponds to 70% air volume of the dried layer) and the calculated refractive index is 1.14.

Comparative Example 2

*Coating solution containing 18.6 wt.-% of aluminium oxide/hydroxide*

To 41.6g deionised water were sequentially added 3.4g of a 9wt.-% solution of lactic acid, 18.6g of the aluminium oxide/hydroxide HP 14/4 (Sasol GmbH, Brunsbüttel, Germany), 31.0g of a 9wt.-% solution of Poval PVA 235 (polyvinyl alcohol binder, Kuraray Europe GmbH, 87-89% hydrolysis grade, high polymerization grade), 0.16g of a 50wt.-% of glycerine and 1.21 g of a 10wt.-% solution of the surfactant Triton X-100 (Sigma Corp., St-Louis, USA). The coating solution was dispersed during 3 minutes with an ultrasound device. Finally, 4.0g of a 10wt.-% solution of boric acid were added and the weight was completed to 100g with deionised water.
The properties of this coating solution are presented in the table below:

| | |
|---|---|
| pH/40°C | 3.5 |
| Viscosity at 227$s^{-1}$/ 40°C | 41mPas |
| $d_{50}$-particle diameter (CPS) | 46nm |
| Polydispersity (CPS) | 1.24 |
| zeta-potential at pH 5 | 32mV |
| Isoelectric point | 7.4 |

The ratio between the PVA binder and aluminium oxide/hydroxide is 15% (wt./wt.).

*Base*

The base was the same as described in Ex. 1.

*Coating onto a transparent polyester base*

75g/$m^2$ of this coating solution were coated at 40°C onto A3 sheets of the aforementioned base. The coated base was then dried for 60 minutes at a temperature of 30°C. An A4 sheet was cut in the middle of the A3 sheet and put in an oven at 40°C for 24 hours to complete the hardening process. The thickness of the dried layer is 15.1μm. The pore volume of the dried layer is 8.2$cm^3/m^2$ (which corresponds to 54% air volume of the dried layer) and the calculated refractive index is 1.29.

Comparative Example 3

*Coating solution containing 18.6 wt.-% of aluminium oxide/hydroxide*

To 41.6g deionised water were sequentially added 3.4g of a 9wt.-% solution of lactic acid, 18.6g of the aluminium oxide/hydroxide Cataloid AP-3 (JGC Catalysts & Chemicals Ltd, Kawasaki, Japan), 31.0g of a 9wt.-% solution of Poval PVA 235 (polyvinyl alcohol binder, Kuraray Europe GmbH, 87-89% hydrolysis grade, high polymerization grade), 0.16g of a 50wt.-% of glycerine and 1.21g of a 10wt.-% solution of the surfactant Triton X-100 (Sigma Corp., St-Louis, USA). The coating solution was dispersed during 3 minutes with an ultrasound device. Finally, 4.0g of a 10wt.-% solution of boric acid were added and the weight was completed to 100g with deionised water.

The properties of this coating solution are presented in the table below:

| | |
|---|---|
| pH/40°C | 4.0 |
| Viscosity at 227$s^{-1}$/40°C | 67mPas |
| $d_{50}$-particle diameter (CPS) | 45nm |
| Polydispersity (CPS) | 1.31 |
| zeta-potential at pH 5 | 31mV |
| Isoelectric point | 9.2 |

The ratio between the PVA binder and aluminium oxide/hydroxide is 15% (wt./wt.).

*Base*

The base was the same as described in Ex. 1.

*Coating onto a transparent polyester base*

75g/$m^2$ of this coating solution were coated at 40°C onto A3 sheets of the aforementioned base. The coated base was then dried for 60 minutes at a temperature of 30°C. An A4 sheet was cut in the middle of the A3 sheet and put in an oven at 40°C for 24 hours to complete the hardening process. The thickness of the dried layer is 13.7μm. The pore volume of the dried layer is 7.3$cm^3$/$m^2$ (which corresponds to 53% air volume of the dried layer) and the calculated refractive index is 1.29.

Example 3

*Aqueous dispersion containing 23wt.-% of positively charged $SiO_2$*

13.9g of zirconyl chloride octahydrate (Fluka AG, Buchs, Schweiz), 4.5g boric acid and 27.0g of *n*-butylaminopropyltrimethoxysilane (Dynasilan 1189, 98%, available from Degussa AG, Düsseldorf, Germany) were sequentially added to 724.6g of deionised water under mechanical stirring at 5°C. Stirring was continued during 15 minutes. To this solution, 230g of fumed silicone dioxide with a specific surface of 300$m^2$/g (Cab-O-Sil H5, available from Cabot Corp., Billerica, USA) were added at 5°C under vigorous mechanical stirring. This dispersion was further stirred for 10 minutes with a rotor-stator high-shear mixer. The temperature was raised to 50°C during 60 minutes, then the dispersion was allowed to cool to room temperature. Finally, the dispersion was passed at 1.5liters/h through a bead-mill Dyno-Mill Multi-Lab (WAB AG Maschinenfabrik) filled at 45%-Vol. with zirconium oxide beads having a diameter of 0.8-1.0mm.

The properties of this coating solution are presented in the table below:

| | |
|---|---|
| pH/40°C | 4.3 |
| Viscosity at 227$s^{-1}$/40°C | 63mPas |
| $d_{50}$-particle diameter (CPS) | 59nm |
| Polydispersity (CPS) | 1.67 |
| zeta-potential at pH 5 | 40mV |

(continued)

| | |
|---|---|
| Isoelectric point | pH 9.0 |

*Coating solution containing 14.8wt.-% positively charged silica*

To 128.7 g of the dispersion described above were added at 40°C 63.4g of a 7wt.-% solution of Poval PVA 235 (polyvinyl alcohol binder, Kuraray Europe GmbH, 87-89% hydrolysis grade, high polymerization grade), 2.88g of a 5.26wt.-%-solution of the surfactant Olin G (Arch Chemicals, Norwalk, USA) and 5.0g deionised water.

The pH of this coating solution was 4.4 and its viscosity at $227s^{-1}$ was 61mPas. The ratio between the PVA binder and silica is 15:100 (wt./wt.).

*Base*

The base was the same as described in Ex. 1.

*Coating onto a transparent polyester base*

$50g/m^2$ of this coating solution were coated at 40°C onto A3 sheets of the aforementioned base. The coated base was then dried for 60 minutes at a temperature of 30°C. An A4 sheet was cut in the middle of the A3 sheet and put in an oven at 40°C for 24 hours to complete the hardening process. The thickness of the dried layer is 13.8μm. The pore volume of the dried layer is $8.6cm^3/m^2$ (which corresponds to 62% air volume) and the calculated refractive index is 1.18.

Example 4

*Aqueous dispersion containing 23wt.-% of positively charged $SiO_2$*

6.11 g of zirconyl chloride octahydrate (Fluka AG, Buchs, Schweiz), 4.94g of aluminium chlorohydrate (Locron P, available from Clariant AG, Muttenz, Switzerland) 4.5g boric acid and 24.8g of n-butylaminopropyltrimethoxysilane (Dynasilan 1189, 98%, available from Degussa AG, Düsseldorf, Germany) were sequentially added to 729.6g of deionised water under mechanical stirring at 5°C. Stirring was continued during 15 minutes. To this solution, 230g of fumed silicone dioxide with a specific surface of $300m^2/g$ (Cab-O-Sil H5, available from Cabot Corp., Billerica, USA) were added at 5°C under vigorous mechanical stirring. This dispersion was further stirred for 10 minutes with a rotor-stator high-shear mixer. The temperature was raised to 50°C during 60 minutes, then the dispersion was allowed to cool to room temperature. Finally, the dispersion was passed at 1.5liters/h through a bead-mill Dyno-Mill Multi-Lab (WAB AG Maschinenfabrik) filled at 45%-Vol. with zirconium oxide beads having a diameter of 0.8-1.0mm.

The properties of this dispersion are presented in the table below:

| | |
|---|---|
| pH/40°C | 4.9 |
| Viscosity at $227s^{-1}$/ 40°C | 32mPas |
| $d_{50}$-particle diameter (CPS) | 62nm |
| Polydispersity (CPS) | 1.88 |
| zeta-potential at pH 5 | 38mV |
| Isoelectric point | pH 8.7 |

*Coating solution containing 14.8wt.-% positively charged silica*

To 128.7 g of the dispersion described above were added at 40°C 63.4g of a 7wt.-% solution of Poval PVA 235 (polyvinyl alcohol binder, Kuraray Europe GmbH, 87-89% hydrolysis grade, high polymerization grade), 2.88g of a 5.26wt.-%-solution of the surfactant Olin G (Arch Chemicals, Norwalk, USA) and 5.0g deionised water. The pH of this coating solution was 4.9 and its viscosity at $227s^{-1}$ was 70mPas. The ratio between the PVA binder and silica is 15:100 wt./wt..

*Base*

The base was the same as described in Ex. 1.

*Coating onto a transparent polyester base*

50g/m$^2$ of this coating solution were coated at 40°C onto A3 sheets of the aforementioned base. The coated base was then dried for 60 minutes at a temperature of 30°C. An A4 sheet was cut in the middle of the A3 sheet and put in an oven at 40°C for 24 hours to complete the hardening process. The thickness of the dried layer is 15.2μm. The pore volume of the dried layer is 9.2cm$^3$/m$^2$ (which corresponds to 60% air volume) and the calculated refractive index is 1.19.

Example 5

*Aqueous dispersion containing 23wt.-% of positively charged $SiO_2$*

35.9g of a 34wt.-% solution of Rezal 67 (zirconium-aluminium pentachlorohydrate, Summit Reheis, New-York, USA), 4.5g boric acid and 24.8g of n-butylaminopropyltrimethoxysilane (Dynasilan 1189, 98%, available from Degussa AG, Düsseldorf, Germany) were sequentially added to 704.8g of deionised water under mechanical stirring at 5°C. Stirring was continued during 15 minutes. To this solution, 230g of fumed silicone dioxide with a specific surface of 300m$^2$/g (Cab-O-Sil H5, available from Cabot Corp., Billerica, USA) were added at 5°C under vigorous mechanical stirring. This dispersion was further stirred for 10 minutes with a rotor-stator high-shear mixer. The temperature was raised to 50°C during 60 minutes, then the dispersion was allowed to cool to room temperature. Finally, the dispersion was passed at 1.5liters/h through a bead-mill Dyno-Mill Multi-Lab (WAB AG Maschinenfabrik) filled at 45%-Vol. with zirconium oxide beads having a diameter of 0.8-1.0mm.
The properties of this dispersion are presented in the table below:

| | |
|---|---|
| pH/40°C | 4.7 |
| Viscosity at 227s$^{-1}$/40°C | 28mPas |
| $d_{50}$-particle diameter (CPS) | 53nm |
| Polydispersity (CPS) | 1.52 |
| zeta-potential at pH 5 | 42mV |
| Isoelectric point | pH 8.8 |

*Coating solution containing 14.8wt.-% positively charged silica*
To 128.7 g of the dispersion described above were added at 40°C 63.4g of a 7wt.-% solution of Poval PVA 235 (polyvinyl alcohol binder, Kuraray Europe GmbH, 87-89% hydrolysis grade, high polymerization grade), 2.88g of a 5.26wt.-% solution of the surfactant Olin G (Arch Chemicals, Norwalk, USA) and 5.0g deionised water. The pH of this coating solution was 4.8 and its viscosity at 227s$^{-1}$ was 72mPas. The ratio between the PVA binder and silica is 15:100 (wt./wt.).

*Base*

The base was the same as described in Ex. 1.

*Coating onto a transparent polyester base*

50g/m$^2$ of this coating solution were coated at 40°C onto A3 sheets of the aforementioned base. The coated base was then dried for 60 minutes at a temperature of 30°C. An A4 sheet was cut in the middle of the A3 sheet and put in an oven at 40°C for 24 hours to complete the hardening process. The thickness of the dried layer is 15.4μm. The pore volume of the dried layer is 9.7cm$^3$/m$^2$ (which corresponds to 63% air volume) and the calculated refractive index is 1.17.

Test Results

| | | Example 1 | Example 2 | Comparative Example 1 | Comparative Example 2 | Comparative Example 3 | Example 3 | Example 4 | Example 5 |
|---|---|---|---|---|---|---|---|---|---|
| **Layer thickness** | μm | 16.0 | 15.4 | 16.0 | 15.1 | 13.7 | 13.8 | 15.2 | 15.4 |
| **Pore volume** | $cm^3/m^2$ | 10.1 | 9.8 | 11.1 | 8.2 | 7.3 | 8.6 | 9.2 | 9.7 |
| | % | 63 | 63 | 70 | 54 | 53 | 62 | 60 | 63 |
| **Refraction index** | | 1.17 | 1.17 | 1.14 | 1.29 | 1.29 | 1.18 | 1.19 | 1.17 |
| **Direct transmission [%]**, corrected for base and thickness variations | | | | | | | | | |
| 350-800nm | average | 97.7 | 97.1 | 89.1 | 93.1 | 95.8 | 94.4 | 95.7 | 94.6 |
| | max | 99.2 | 98.6 | 92.6 | 97.8 | 99.0 | 97.4 | 98.3 | 97.5 |
| | min | 91.1 | 90.6 | 79.8 | 78.0 | 85.7 | 82.7 | 85.2 | 82.4 |
| | $\lambda(T_{max})$ [nm] | 678 | 669 | 797 | 786 | 792 | 694 | 694 | 795 |
| **Diffuse transmission [%]**, corrected for base | | | | | | | | | |
| 350-800nm | average | 1.7 | 2.4 | 9.9 | 3.8 | 2.2 | 4.0 | 3.0 | 3.5 |
| | Max | 4.8 | 5.1 | 15.0 | 9.0 | 5.5 | 8.6 | 7.2 | 8.1 |
| | Min | 0.5 | 1.3 | 6.9 | 1.3 | 0.7 | 1.8 | 1.2 | 1.5 |
| | $\lambda(Diff_{max})$ [nm] | 351 | 350 | 369 | 353 | 350 | 350 | 351 | 353 |

Discussion of Test Results

Examples 1 and 2 have a refractive index of $n_D$ < 1.2. In addition, examples 1 and 2 show high direct transmission and low diffuse transmission values. These layers are considered to be excellent for most optical applications.
Examples 3, 4 and 5 have a refractive of $n_D$ < 1.2. These examples show an acceptable direct transmission and also acceptable diffuse transmission values. These layers are considered to be suited for most optical applications.
Comparative example 1 has a lower refractive index. However, direct transmission is lower and diffuse transmission is much higher. Layers having such properties appear not suited for optical applications because of high light loss.
Comparative examples 2 and 3 show better direct transmission and lower diffuse transmission values than comparative example 1. However, the refractive index is higher. Layers having such properties show no significant advantage over conventional layers for optical applications, e.g. made from polymers.

REFERENCE NUMBERS

**[0205]**

(1) layer structure

(2) substrate layer

(3) PCS layer

(4) silicon oxide particles

(5) further, intermediate layer (optional)

(6) further, additional layer(s) (optional)

(7) Optical device

(8) Opening

(9) Light path

(10) outermost further layer (optional)

(11) innermost further layer (optional)

(12) further layers (optional)

**Claims**

**1.** A layer structure (1) comprising

(a) a substrate layer (2); and
(b) a PCS layer (3) at least partially superimposed to the substrate layer (2),
wherein the PCS layer (3) comprises a plurality of silicon oxide particles (4),
wherein said silicon oxide particles (4) have a positively charged surface, wherein the refractive index of the PCS layer (3) is less than 1.2.

**2.** The layer structure (1) according to claim 1, wherein the layer structure (1) forms a part of an optical device (7) selected from the group consisting of light emitting devices, light guiding devices, light converting devices, light recording devices, light diffusing devices and anti-reflection devices.

**3.** The layer structure (1) according to any of the preceding claims, wherein the PCS layer comprises an amount of silicon oxide particles (4) having a positively charged surface in a range of from 0.5 $g/m^2$ to 25 $g/m^2$.

**4.** The layer structure (1) according to any of the preceding claims, wherein the molar ratio of A1 : Si in the PCS layer (1) is in the range of from 0.1 to 10 mol-%, based on the number of moles of silicon.

**5.** The layer structure (1) according to any of claims 1 through 3, wherein the molar ratio of Zr : Si in the PCS layer (3) is in the range of from 0.05 to 2 mol-%, based on the number of moles of silicon.

**6.** The layer structure (1) according to any of claims 1 through 5, wherein the molar ratio of Aminoorganosilane : Si in the PCS layer (3) is in the range of from 0.5 to 5.0 mol-%, based on the number of moles of silicon.

**7.** The layer structure (1) according to any of the preceding claims, wherein the silicon oxide particles (4) having a positively charged surface in the PCS layer (3) are based on fumed silica.

**8.** The layer structure (1) according to any of the preceding claims, wherein the silicon oxide particles (4) having a positively charged surface have an average particle diameter of from 1 to 200 nm.

**9.** The layer structure (1) according to any of the preceding claims, wherein the PCS layer (3) has a pore volume in the range of from 55 to 80 Vol.-%, based on the total volume of the PCS layer (3).

**10.** The layer structure (1) according to any of the preceding claims, wherein the PCS layer (3) has a thickness in the range of from 1 - 50 $\mu$m.

**11.** The layer structure (1) according to any of the preceding claims, wherein the PCS layer (3) is comprised of at least the following elements:

i) 65 - 85 % by weight of silica;
ii) 0.5 - 10 % by weight of at least a compound selected from the group comprising aluminium, zirconium or both;
iii) 2 - 10 % by weight of an aminoorganosilane;
iv) 5 - 20 % by weight of binder
v) 0.5 - 4 % by weight of hardener;
wherein the fractions of i) to v) sum up to 100 %.

**12.** The layer structure (1) according to any of the preceding claims, wherein the PCS layer has the lowest refractive index of all layers in the layer structure.

**13.** The layer structure (1) according to any of claims 1 to 11, wherein the layer structure (1) comprises two or more PCS layers (3), wherein the refractive index of these PCS layers (3) is lower than the refractive index of any other layer (5, 6) in the layer structure (1).

**14.** The layer structure (1) according to any of the preceding claims, wherein the average direct transmission of the PCS layer (3) is in the range of from 90 to 99.9 %.

**15.** The layer structure (1) according to any of the preceding claims, wherein the average diffuse transmission of the PCS layer (3) is less than 4 %.

**16.** The layer structure (1) according to any of the preceding claims, wherein the silicon oxide particles (4) having a positively charged surface of the PCS layer have a Zeta-Potential of at least 0 mV, preferable of at least 20 mV, or of at least 30 mV.

**17.** The layer structure (1) according to any of the preceding claims comprising at least one further layer (5, 6) adjacent to the PCS layer (3), wherein the refractive index of the at least one further layer is at least 0.2 refractive index units higher than the refractive index of the first PCS layer.

**18.** A process for preparing a layer structure (1) having a substrate and a PCS layer (3) comprising at least the process steps:

(I) providing a substrate layer (2);
(II) superimposing to the substrate layer (2) a PCS layer (3),
wherein the PCS layer (3) comprises a plurality of silicon particles (4),

wherein said silicon oxide particles (4) having a positively charged surface;
(III) optionally superimposing at least one further layer (6) onto the substrate layer (2).

**19.** The process according to claim 18, wherein step (II) is performed by at least the following steps:

i. preparing a liquid phase comprising a plurality of silicon oxide particles (4) having a positively charged surface and at least one liquid;
ii. coating the liquid phase with amount in the range of from 4 to 200 g/$m^2$ onto the substrate layer (2); and then
iii. drying the coating formed in step ii. resulting in the PCS layer (3).

**20.** The process according to claim 18 or 19, wherein the silicon oxide particles (4) having a positively charged surface are prepared by a treatment of fumed silica with

i) at least a trivalent aluminium compound; or
ii) at least a tetravalent zirconium compound; or
iii) at least a zirconium-aluminium hydrate complex; or
iv) at least a aminoorganosilane; or
v) a reaction product of at least a trivalent aluminium compound with at least an aminoorganosilane; or
vi) a reaction product of at least a tetravalent zirconium compound with at least an aminoorganosilane; or
vii) a reaction product of at least a trivalent aluminium compound and at least a tetravalent zirconium compound with at least an aminoorganosilane, or
viii) a reaction product of at least a zirconium-aluminium hydrate complex with an aminoorganosilane; or
ix) a combination of at least two of i) - viii).

**21.** The process according to any of claims 18 to 20, wherein at least step (II) is performed as a curtain coating process or a cascade coating process.

**22.** A layer structure (1) obtainable by a process according to any of claims 18 to 21.

**23.** The layer structure (1) according to claim 22, wherein the layer structure (1) comprises

(c) a substrate layer (2); and
(d) a PCS layer (3), at least partially superimposed to the substrate layer (2), comprising a plurality of silicon oxide particles (4) having a positively charged surface,
wherein the refractive index of the PCS layer (3) is less than 1.2.

**24.** The layer structure (1) according to any of claims 1 to 17 or 22 to 23, wherein the pore volume of the PCS layer (3) is in the range of from 55 to 80 %-Vol., based on the total volume of the layer.

**25.** The layer structure (1) according to any of claims 1 to 17 or 22 to 24, wherein the PCS layer (3) is a transparent layer, an thermally insulating layer or an antireflection layer, or a combination of at least two thereof..

**26.** An optical device (7) comprising a layer structure (1) according to any of claim 1 to 17 or 22 to 25.

**27.** Use of a layer structure according to any of claims 1 to 17 or 22 to 25 having silicon oxide particles (4) with a positively charged surface for optical applications, in particular for opto-electronic applications.

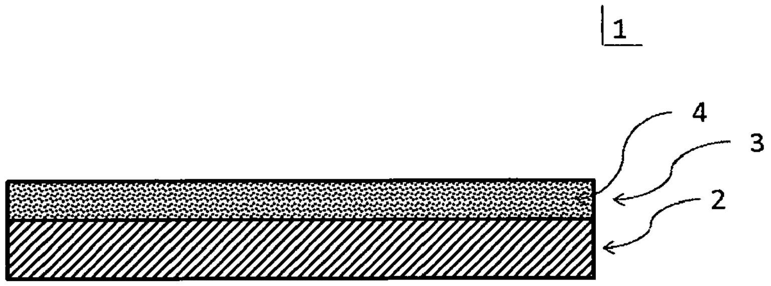


*FIGURE 1*

Europäisches Patentamt
European Patent Office
Office européen des brevets

# EUROPEAN SEARCH REPORT

Application Number
EP 12 00 0781

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/011919 A1 (ILFORD IMAGING CH GMBH [CH]; BEER ROBERT [CH]; GUGLER GILBERT [CH]; PA) 31 January 2008 (2008-01-31) * the whole document * ----- | 1-27 | INV. C23C18/12 |
| X | WO 00/20221 A1 (CABOT CORP [US]) 13 April 2000 (2000-04-13) * the whole document * ----- | 1-27 | |
| X | US 2006/078696 A1 (FURHOLZ URS [CH] ET AL FUERHOLZ URS [CH] ET AL) 13 April 2006 (2006-04-13) * the whole document * ----- | 1-27 | |

TECHNICAL FIELDS SEARCHED (IPC)
C23C

The present search report has been drawn up for all claims

1

| Place of search | Date of completion of the search | Examiner |
|---|---|---|
| Munich | 10 September 2012 | Ramos Flores, Cruz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 12 00 0781

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2012

| Patent document cited in search report | Publication date | Patent family member(s) | Publication date |
|---|---|---|---|
| WO 2008011919 A1 | 31-01-2008 | CN 101501533 A | 05-08-2009 |
| | | EP 2047302 A1 | 15-04-2009 |
| | | JP 2009544491 A | 17-12-2009 |
| | | US 2010208349 A1 | 19-08-2010 |
| | | WO 2008011919 A1 | 31-01-2008 |
| WO 0020221 A1 | 13-04-2000 | AU 6281399 A | 26-04-2000 |
| | | DE 69922532 D1 | 13-01-2005 |
| | | DE 69922532 T2 | 03-11-2005 |
| | | EP 1124693 A1 | 22-08-2001 |
| | | JP 4704564 B2 | 15-06-2011 |
| | | JP 2002526564 A | 20-08-2002 |
| | | US 6420039 B1 | 16-07-2002 |
| | | WO 0020221 A1 | 13-04-2000 |
| US 2006078696 A1 | 13-04-2006 | AU 2005293632 A1 | 20-04-2006 |
| | | CN 101035868 A | 12-09-2007 |
| | | EP 1655348 A1 | 10-05-2006 |
| | | JP 4481232 B2 | 16-06-2010 |
| | | JP 2006111527 A | 27-04-2006 |
| | | KR 20070058691 A | 08-06-2007 |
| | | US 2006078696 A1 | 13-04-2006 |
| | | US 2012078002 A1 | 29-03-2012 |
| | | WO 2006040304 A1 | 20-04-2006 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3903258 A
- US 5179220 A


### Non-patent literature cited in the description


- **S. BRUNAUER ; P.H. EMMET ; J. TELLER.** Adsorption of Gases in Multimolecular Layers. *Journal of the American Chemical Society,* 1938, vol. 60, 309-319